# EUROPEAN PATENT APPLICATION

(11) **EP 4 674 722 A1**
(43) Date of publication of application: **07.01.2026**
(21) Application number: 24382719.3
(22) Date of filing: 04.07.2024
(51) Int. Cl.: B61F 5/50, B61F 19/00

(54) **RAIL VEHICLE ROLLING AXLE PROTECTOR**

(71) Applicant: Mondragon Goi Eskola Politeknikoa Jose Maria Arizmendiarrieta, S.COOP., 20500 Arrasate-Mondragon (Gipuzkoa) (ES)
(72) Inventor: MORALES, Unai, 20300 Irun (ES); ESNAOLA, Aritz, 20159 Zizurkil (ES)
(74) Representative: Galbaian S.Coop.

(57) **Abstract**

Rail vehicle rolling axle protector (100) for rail vehicles comprising a sleeve (1a, 1b) comprising at least one longitudinal groove and configured to be arranged around the rolling axle (20), damping means configured to be arranged between the rolling axle (20) and the sleeve (1a, 1b), and fixing means configured to fix the sleeve (1a, 1b) to the rolling axle (20) and to compress the damping means. Further, the fixing means are configured to be fixed to the rolling axle (20) and hold the sleeve (1a, 1b), allowing the movement of the sleeve (1a, 1b) towards the rolling axle (20) in the event the sleeve (1a, 1b) receives an impact.

## Description

### TECHNICAL FIELD

The present invention relates to rail vehicle rolling axle protectors and rail vehicle rolling axles incorporating such an axle protector.

### PRIOR ART

The rolling axles of rail vehicles, as well as the wheels themselves, are safety-critical components of rail traffic and it must be ensured that the structural characteristics of these axles are maintained without significant damage during use by protecting them against aggression from external elements.

During rail vehicle traffic, especially at high speeds (over 200 km/h), rolling axles can also be impacted by external elements, such as track ballast stones, ice chunks, etc., which can generate notches in the axle surface. These notches cause concentrations of local stresses which can lead to the initiation of cracks on the axle due to fatigue stresses, which in turn can propagate to the point where the rolling axle breaks, a failure with potentially catastrophic consequences.

It is well known to protect the rolling axles of rail vehicles, with the same purpose of resisting impacts and extending axle life, with an axle protector arranged covering the rolling axle.

For example, WO2017203080A1 discloses a rail vehicle rolling axle protector comprising two half sleeves that are arranged surrounding the rolling axle, damping means that are arranged between the rolling axle and the half-shells, and a metal clamp on the outside of the half sleeves for joining the half sleeves together and holding the damping means against the rolling axle and the half sleeves with a compression.

### DISCLOSURE OF THE INVENTION

The object of the invention is to provide a rolling axle protector for rail vehicles and a rolling axle comprising such an axle protector, as defined in the claims.

A first aspect of the invention relates to a rolling axle protector for rail vehicles comprising a sleeve comprising at least one longitudinal groove and configured to be arranged surrounding the rolling axle, damping means configured to be arranged between the rolling axle and the sleeve, and fixing means configured to fix the sleeve to the rolling axle and to compress the damping means. In addition, the fixing means are configured to be fixed to the rolling axle and hold the sleeve, allowing the movement of the sleeve towards the rolling axle in the event of the sleeve receives an impact.

A second aspect of the invention relates to a rolling axle of rail vehicles comprising an axle protector as defined above.

The protector of the invention protects the rolling axle from impacts, extending its service life. The sleeve protects the rolling axle from external elements, such as ballast stones or ice chunks on the track. In this way, the protector prevents these external elements from impacting the rolling axle, which can cause structural damage to the axle, such as notches.

Furthermore, in the event the sleeve receives an impact or vibrations are generated, the fixing means allow the sleeve, or at least the impacted part of the sleeve, can be moved towards the rolling axle, with the consequent deformation by compression of the damping means allowing the energy of the impact to be dissipated.

In the axle protectors of the state of the art, the fixing means are designed to transmit the rotation through friction between the sleeve and the axle, which is ensured by the compression of the damping means exerted by the fixing means. However, as the centrifugal forces increase at high rotational speeds, it is more difficult to ensure the transmission of rotation through compression of the damping means.

In contrast to the state of the art, in the axle protector of the invention, because the fixing means are configured to be fixed to the rolling axle and hold the sleeve, compression of the damping means is not necessary for the fixation of the sleeve and the transmission of the rotation. Thanks to these fixing means, it is ensured that the sleeve remains fixed to the axle and continues to rotate in unison even at high speeds and even if the damping means relax over time and are no longer compressed.

Furthermore, the axle protector of the invention ensures a good damping capacity of the damping means, even at high rotational speeds. Although in the axle protector of the invention the fixing means are also configured to compress the damping means, as mentioned above, the compression of these damping means is not to ensure the fixation of the sleeve and the transmission of the rotation, but so that the protector once mounted on the axle alters as little as possible the dynamic behaviour of the axle in operation. Thus, a better damping capacity is obtained without the need for excessive compression of the damping means.

Therefore, the axle protector of the invention protects the rolling axle to resist impacts and extend the service life of the axle even at high rotational speeds. Furthermore, it is able to ensure better fixation of the sleeve and better damping of possible impacts and vibrations even at high speeds.

These and other advantages and features of the invention will become apparent in view of the figures and the detailed description of the invention.

### DESCRIPTION OF THE DRAWINGS

Figure 1 shows an exploded view of a rail vehicles rolling axle protector according to a preferred embodiment of the invention.
Figure 2 shows a front view of the axle protector of figure 1 once assembled.
Figure 3 shows a perspective view of the axle protector of figure 1 once assembled, in which a quarter sleeve and the dampers of said quarter sleeve have been removed in order to better see the fixing means.

### DETAILED DISCLOSURE OF THE INVENTION

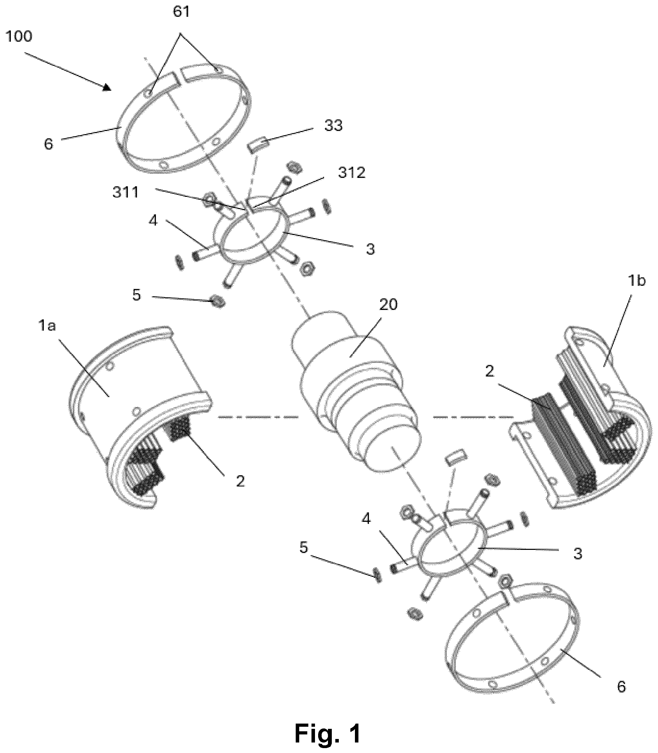

Figures 1 to 3 show a rail vehicle axle protector 100 according to a preferred embodiment of the invention.

The axle protector 100 of the invention comprises a sleeve 1 comprising at least one longitudinal groove which is configured to be arranged surrounding the rolling axle 20. It also comprises damping means configured to be arranged between the rolling axle 20 and the sleeve 1, and fixing means configured to fix the sleeve 1 to the rolling axle 20 and to compress the damping means.

The longitudinal groove extends parallel to the axis of rotation of the rolling axle 20 from one end to the other along the entire length of the sleeve 1. The gap of the groove can be enlarged or reduced allowing to assemble or disassemble of the sleeve 1 on the rolling axle 20.

The damping means are capable of absorbing and dissipating the impact energy. For example, damping means based on elastomers or damping means based on auxetic cellular structures are able to dissipate impact energy by converting it into thermal energy upon deformation due in part to the internal process of material hysteresis, friction and heat generation. The impact energy dissipation capability of the damping means is due to the deformation capability of the geometry as well as the viscoelastic material properties of the damping means.

In addition, the fixing means are configured to be fixed to the rolling axle 20 and hold the sleeve 1, allowing the movement of the sleeve 1 or at least an impacted part of the sleeve 1 towards the rolling axle 20 in the event the sleeve 1 receives an impact.

Thus, as described above, the axle protector 100 of the invention protects the rolling axle 20 to withstand impacts and extend the service life of the axle 20 even at high rotational speeds.

The sleeve 1 preferably has a substantially cylindrical shape. Although the sleeve 1 has a substantially cylindrical shape, the ends of the sleeve 1 may have another shape, for example a conical, concave or convex shape in order to cover a soaking area between a wheel and the rolling axle 20.

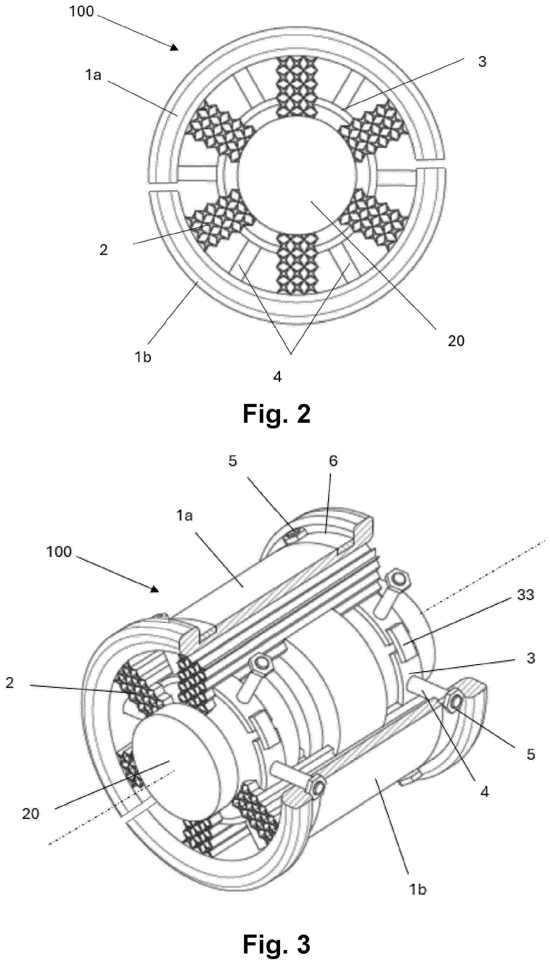

The sleeve 1 preferably consists of two half sleeves 1a and 1b, as shown in the figures. In this way, it allows to assemble and disassemble the axle protector 100 without deforming the half sleeves 1a and 1b during intermediate maintenance operations which do not require to remove the wheels from the rolling axle 20. In the embodiment shown in the figures, the sleeve 1 is formed by two half sleeves 1a and 1b of semi-cylindrical shape and comprises two longitudinal grooves, each longitudinal groove being arranged between opposite ends of the half sleeves 1a and 1b in a section perpendicular to the axis of rotation of the rolling axle 20, as shown in figure 2.

The fixing means preferably comprise a plurality of rods 4, each rod 4 comprising a first end which is fixed to the rolling axle 20 and a second end which passes through the sleeve 1, the fixing means for each rod 4 also comprising a stop element 5 coupled to the second end of the respective rod 4 from the outside of the sleeve 1, such that the stop element 5 holds the sleeve 1.

Therefore, the fixing means allow the movement of the sleeve 1, or at least an impacted part of the sleeve 1, between the first and the second end of the rod 4 so that the damping means dampen possible impacts or vibrations and do not transmit them to the rolling axle 20. In the event that the sleeve 1 receives an impact or vibrations are generated, the longitudinal groove of the sleeve 1 can be narrowed by reducing the diameter of the sleeve 1 as it moves towards the rolling axle 20, and the fixing means can guide the movement of at least the impacted part of the sleeve 1 towards the rolling axle 20 until another non-impacted part of the sleeve 1 abuts against one or more stop elements 5 coupled to the rods 4. In this way, a more secure fixation of the sleeve 1 is achieved. The sleeve 1 cannot be disengaged unless all the stop elements 5 are released and the sleeve 1 moves out of the rods 4. Even if one of the stop elements 5 is released, the remaining stop elements 5 ensure that the fixing means continue to perform the dual function to compress the damping means and to fix the sleeve 1 to the rolling axle 20. Also, as the rods 4 are largely protected by the sleeve 1 on the inside, it is more difficult to damage or loosen the fixing means from the rolling axle 20.

In the embodiment shown in the figures, the rods 4 and the damping means are not in contact with each other so that they do not interfere with each other. Furthermore, each second end of the rod 4 passes through a bore in the sleeve 1 that is smaller than the size of the stop element 5.

The rods 4 preferably project radially from the rolling axle 20. Radial means perpendicular to the axis of rotation of the rolling axle 20. This ensures that the compression of the damping means and the guiding of the movement of the sleeve 1 towards the rolling axle 20 are mainly radial, thus avoiding the generation of shear stresses. This is particularly advantageous for anisotropic damping means with a higher energy absorption capacity in the radial direction than in other directions.

The stop elements 5 preferably are nuts which are fixed to the end of the corresponding rod 4. This facilitates the assembly and disassembly of the axle protector 100 during maintenance operations in order to be able to carry out visual inspections to check the absence of defects or cracks of the rolling axle 20 or to be able to replace the damping means in case they have become relaxed, as well as to allow easy balancing of the axle protector 100 coupled to the rolling axle 20 during its assembly.

The fixing means preferably comprise at least one set of rods 4 configured to be arranged in an axial position of the rolling axle 20, the rods 4 of said set being equally distributed along the circumference of the rolling axle 20. In other words, the rods 4 of the set are evenly distributed along the circumference of the rolling axle 20. This ensures that the movement of the sleeve 1 is guided and that the damping means are compressed uniformly along the entire circumference of the rolling axle 20 in the axial position of the rolling axle 20.

In the embodiment shown in the figures, the axle protector 100 comprises close to each end of the sleeve 1 a set of rods 4. In this way, the damping means are compressed uniformly along the entire length of the sleeve 1, minimising the area of the rolling axle 20 affected by the fixation of the set of rods 4.

Each set of rods 4 may comprise at least three rods 4. This allows the axle protector 100 to be mounted in a balanced manner and to achieve the least possible disruption of the dynamic behaviour of the rolling axle 20, as well as multiple self-locking guidance and fixation of the sleeve 1. Although the greater the number of rods 4 in the set, multiples of three rods 4 per set, the greater is the guidance and the more secure is the fixation of the sleeve 1, in order to the fixing means are not too complex or costly, each set may comprise a maximum of twelve rods.

In the embodiment shown in the figures each set comprises six rods 4 so that an optimum compromise between balancing, guidance, safety, simplicity and cost of the axle protector 100 is achieved.

In one embodiment, the fixing means comprise an annular support 3 for each set of rods 4, the annular support 3 being configured to be fixed to the rolling axle 20 and the rods 4 of the set being fixed to the annular support 3 as shown in figures 1 to 3. In this way, it is sufficient to fix only the annular support 3 to the rolling axle 20 to fix all the rods 4 of the set to the rolling axle 20. In addition, any stresses that have not been absorbed by the damping means and are transmitted to the rolling axle 20 via the fixing means are better distributed over the entire ring support 3 than if the first ends of the rod set 4 were directly fixed to the rolling axle 20.

In the preferred embodiment, the ring support 3 is an inner clamp comprising open ends 311, 312 and a mechanical closure 33 which joins the open ends 311, 312 together. This enables to assemble and disassemble the axle protector 100 from the rolling axle 20 in a very simple manner by acting on the mechanical closure 33.

However, in another embodiment (not shown in the figures) the annular support on the surface configured to be fixed to the rolling axle may comprise an adhesive capable of being temperature activated to facilitate rapid and secure fixation of the fixing means to the rolling axle.

Preferably, the fixing means comprise an outer clamp 6 for each set of rods 4, such that the outer clamp 6 encloses the sleeve 1, the rods 4 of the set pass through the outer clamp 6 and the stop elements 5 hold the outer clamp 6. In this way, it is more difficult for the stop elements 5 to damage the sleeve 1 because the outer clamp 6 evenly distributes the stresses generated by the stop elements 5 over the sleeve 1 and the stop elements 5 contact the outer clamp 6 instead of directly contacting the sleeve 1.

More preferably, the outer clamp 6 comprises open ends and an opening 61 at each open end, such that a rod 4 passes through both openings 61. This facilitates the assembly and disassembly of the fixing means with the outer clamp 6.

The damping means preferably comprise a plurality of dampers 2 arranged longitudinally on the rolling axle 20 sandwiched between adjacent rods 4 of each rod set 4. This ensures a guided compression of each damper 2 sandwiched between two adjacent rods 4. In addition, this ensures effective contact of the damping means with the sleeve 1 and the rolling axle 20 with a reduced number of dampers 2 and promotes the evacuation of moisture towards the ends of the sleeve 1.

The damper 2 may comprise an auxetic cell structure. Auxetic cell structures expand when they are tractioned and densify when they are compressed due to their negative Poisson's modulus. Bidirectional or extruded auxetic cell structures are formed by a plurality of auxetic cells with adjacent interconnected re-entrant, chiral or rotational polygon geometries, such that the elastic and Poisson's moduli of the auxetic geometries can be adjusted depending on the design parameters of the thickness, height, length and angle of the auxetic cell.

The damper 2 with an auxetic cell structure dissipates impact energy during the process of deformation by compression, densification and increased contact and friction between its component cell structures. For example, auxetic cell structures with re-entrant geometries base their impact energy dissipation process on a collapse of the cell by compression, whereby it undergoes large deformations, large changes in its geometry and the folding and densification of the unitary cell. The densification promotes more contacts and increased friction on the inner surfaces of the unitary cell, which ultimately converts the impact energy into heat through internal friction. In this way, dampers 2 with such auxetic cell structures induce a high densification of the material under compression, resulting in a substantial improvement in impact performance during operation compared to rubber or elastomer dampers.

Preferably, the damper 2 comprises a bi-directional auxetic cell structure with an octagonal re-entrant or hexagonal re-entrant geometry. It thus performs better under compressive loading resulting in a transverse shear, increased surface area in contact and increased internal damping and energy dissipation in the form of heat.

The fixing means can be metallic and the sleeve 1 and the damping means can be polymeric. In this way, the fixing means can withstand the fixing forces without damage or plastic deformation, and the sleeve 1 and the damping means can be easily manufactured to the desired geometry.

In one embodiment, the sleeve 1 and the damping means are made of the same material, preferably fiber-reinforced polypropylene or polyamide, as in the embodiment shown in the figures. The fibres can be glass, carbon or aramid fibres. This material thus gives the sleeve 1 good impact resistance and makes it possible to simplify the assembly of the axle protector 100 by manufacturing the sleeve 1 together with the damping means in a single moulded part or by thermally bonding the damping means to the sleeve 1 so that they can be handled as if they were a single part. In this case the auxetic cellular structure of the damper 2 also gives it a high energy absorption capacity.

However, in another embodiment not shown in the figures the dampers and sleeve may be of a different polymeric material, for example, the dampers of elastomeric material and the sleeve of fibre-reinforced polypropylene or polyamide.

A second aspect of the invention relates to a rail vehicle rolling axle comprising an axle protector 100 as defined above.

## Claims

1. Rail vehicle rolling axle protector, comprising a sleeve (1) comprising at least one longitudinal groove and configured to be arranged around the rolling axle (20), damping means configured to be arranged between the rolling axle (20) and the sleeve (1), and fixing means configured to fix the sleeve (1) to the rolling axle (20) and compress the damping means, **characterised in that** the fixing means are configured to be fixed to the rolling axle and hold the sleeve (1), allowing the movement of the sleeve (1) towards the rolling axle (20) in the event the sleeve (1) receives an impact.

2. Rail vehicle rolling axle protector according to claim 1, wherein the fixing means comprise a plurality of rods (4), each rod (4) comprising a first end which is fixed to the rolling axle (20) and a second end which passes through the sleeve (1), the fixing means for each rod (4) also comprising a stop element (5) coupled to the second end of the respective rod (4) from the outside of the sleeve (1), such that the stop element (5) holds the sleeve (1).

3. Rail vehicle rolling axle protector according to claim 2, wherein the rods (4) project radially from the rolling axle (20).

4. Rail vehicle rolling axle protector according to claim 2 or 3, wherein the stop elements (5) are nuts which are screwed onto the end of the corresponding rod (4).

5. Rail vehicle rolling axle protector according to any claims 2 to 4, wherein the fixing means comprise at least one set of rods (4) configured to be arranged in an axial position of the rolling axle (20), the rods (4) of said set being equally distributed along the circumference of the rolling axle (20).

6. Rail vehicle rolling axle protector according to claim 5, wherein each set of rods (4) comprises at least three rods (4), preferably six rods (4).

7. Rail vehicle rolling axle protector according to claim 5 or 6, wherein the fixing means comprise one ring support (3) for each set of rods (4), the ring support (3) being configured to be fixed to the rolling axle (20) and the rods (4) of the set being fixed to the ring support (3).

8. Rail vehicle rolling axle protector according to claim 7, wherein the annular support (3) is an inner clamp comprising open ends (311, 312) and a mechanical closure (33) joining the open ends (311, 312) together.

9. Rail vehicle rolling axle protector according to any of the claims 5 to 8, wherein the fixing means comprise an outer clamp (6) for each set of rods (4), such that the outer clamp (6) encloses the sleeve (1), the rods (4) of the set pass through the outer clamp (6) and the stop elements (5) hold the outer clamp (6).

10. Rail vehicle rolling axle protector according to claim 9, wherein the outer clamp (6) comprises open ends and an opening (61) at each open end, such that a rod (4) passes through both openings (61).

11. Rail vehicle rolling axle protector according to any of the claims 5 to 10, wherein the damping means comprise a plurality of dampers (2) arranged longitudinally on the rolling axle (20) sandwiched between contiguous rods (4) of each set of rods (4).

12. Rail vehicle rolling axle protector according to claim 11, wherein the damper (2) comprises an auxetic cellular structure, preferably a bi-directional auxetic cellular structure with an octagonal re-entrant or hexagonal re-entrant geometry.

13. Rail vehicle rolling axle protector according to any of the preceding claims, wherein the fixing means are metallic and the rod (1) and the damping means are polymeric, the sleeve (1) and the damping means being preferably of the same fibre-reinforced polypropylene or polyamide material.

14. Rail vehicle rolling axle protector according to any of the preceding claims, wherein the sleeve (1) comprises two half sleeves (1a, 1b).

15. Rail vehicle rolling axle comprising an axle protector (100) according to any of the preceding claims.
